# EUROPEAN PATENT SPECIFICATION

(11) **EP 2 302 753 B1**
(45) Date of publication and mention of the grant of the patent: **18.06.2014**
(21) Application number: 09773556.7
(22) Date of filing: 02.07.2009
(51) Int. Cl.: H02G 11/02, B60R 16/02, H02G 11/00, B60R 16/027

(54) **ELECTRIC POWER SUPPLYING DEVICE AND HARNESS ROUTING STRUCTURE USING THE SAME**
ELEKTRISCHE STROMVERSORGUNGSEINRICHTUNG UND KABELBAUMVERLEGUNGSSTRUKTUR DAMIT
DISPOSITIF D'ALIMENTATION ÉLECTRIQUE ET STRUCTURE D'ACHEMINEMENT DE FAISCEAU L'UTILISANT

(30) Priority: 02.07.2008 JP 2008173132
(43) Date of publication of application: 30.03.2011
(73) Proprietor: Yazaki Corporation, Minato-ku Tokyo 108-8333 (JP)
(72) Inventor: TSUBAKI, Akira, Shizuoka (JP)
(74) Representative: Grünecker, Kinkeldey, Stockmair & Schwanhäusser
(86) International application number: PCT/JP2009/062155
(87) International publication number: WO 2010/001978

(56) References cited:
- EP-A2- 0 644 557
- DE-A1- 10 131 950
- DE-A1- 19 717 490
- FR-A1- 2 879 848
- JP-A- 10 181 473
- JP-A- 2000 048 924
- JP-A- 2000 048 924
- JP-A- 2001 128 350
- JP-A- 2004 345 598
- JP-A- 2008 030 716

## Description

### Technical Field

The present invention relates to a power feeding device in which a flat wire harness is spirally wound to absorb a surplus length of the wire harness and pulled out straight to meet the movement of a movable structure and a wire harness arranging structure using the power feeding device,

Such a power feeding device is described in JP2004345598 according to the preamble of claim 1.

### Background Art

Fig. 10 shows one embodiment of a related power feeding device (see patent literature 1).

The power feeding device 51 includes a rectangular housing 53 that spirally accommodates a flat wire harness 52, a disk 54 that supports a spiral part 52a of the flat wire harness 52 in the housing, a central shaft 55 that supports an innermost diameter part of the spiral part 52a, a plurality of rotating rollers 56 that come into contact with outermost diameter parts of the flat wire harness 52 and springs 59 that respectively support the rollers 56 by pin parts 58 along slits 57 of the housing 53 to urge the rollers toward the center of the wire harness.

For instance, the housing 53 is arranged in a vehicle body. One end of the flat wire harness 52 is led out from one opening part 60 of the housing 53 so as to be expansible and arranged toward a door and the other end of the flat wire harness 52 is fixed to the other opening part 61 of the housing 53 and led out to the vehicle body side. For instance, the flat wire harness 52 is pulled out when the door is opened, and the flat wire harness is pulled in by a restoring force of the spiral part 52a itself to absorb a surplus length (a looseness) when the door is closed.

When the springs 59 are not used, only the diameter of the outermost diameter part of the flat wire harness 52 is greatly enlarged to come into contact with an inner surface of the housing 53 so that a surplus length absorbing performance of the flat wire harness 52 is deteriorated due to a frictional resistance thereof. However, when the springs 59 are allowed to externally come into resilient contact with the flat wire harness 52, the above described problem is eliminated.

### Literature of Related Art

### Patent Literature

Patent Literature 1: JP-A-2008-60089 (Fig. 3, Fig. 6)

### Summary of Invention

### Technical Problem

However, in the related power feeding device 51, when the rigidity of the flat wire harness 52 is low, there is a fear that in parts where the rollers 56 do not come into contact with the flat wire harness, the diameter of the flat wire harness 52 may be possibly enlarged, so that the flat wire harness 52 cannot maintain the spiral form and the surplus length absorbing function is prevented. Further, there is a fear that since a locus of the wire harness from the innermost diameter part to the outermost diameter part of the spiral part 52a is uniformly expanded depending on the rigidity of the flat wire harness 52, the surplus length absorbing performance is low relative to a dimension of the outside diameter of the spiral part 52a (a length of absorbing the surplus length is short relative to a length of the dimension of the outside diameter). Further, there is an anxiety that since the number of parts is large, the structure is complicated, expensive and enlarged.

By taking the above-described points into consideration, it is an object of the present invention to provide a power feeding device that can improve a wire harness surplus length absorbing performance, simplify a structure and decrease a cost in the device which absorbs a surplus length by enlarging or reducing spirally the diameter of a flat wire harness and a wire harness arranging structure using the power feeding device.

### Solution to Problem

In order to achieve the above-described object, it is provided a power feeding device comprising:
a fixing portion;
a flat wire harness that is arranged so as to wind a plurality of times on a periphery of the fixing portion as a center; and
a resilient member that is provided between the fixing portion and a winding part of the flat wire harness,
wherein the resilient member urges the winding part of the flat wire harness in a direction in which the flat wire harness separates from the fixing
wherein the flat wire harness is arranged so as to be overlapped in a portion diametrical direction in the winding part by an urging operation of the resilient member.

Preferably, a plurality of parts of the flat wire harness are arranged so as to be overlapped in a diametrical direction in the winding part by an urging operation of the resilient member. Here, the diametrical direction means a diametrical direction with respect to circumferences formed by winding the flat wire harness.

By the above configuration, since the resilient member urges the winding part of the flat wire harness from an inner side to an outer side, namely, urges the winding part in a direction in which the winding part is expanded in its diameter direction by a restoring force of the winding part itself. Therefore, the winding part is maintained in an annular form even by the small number of resilient members and a surplus length absorbing function is assuredly exhibited when the flat wire harness is wound after the flat wire harness is pulled out. Further, since the resilient member does not urge the winding part to absorb the surplus length, but the spring member serves to expand the winding part to a large diameter at a position separating from the boss part, an entire length of the winding part is increased more than that when the resilient member is not used (the winding part is configured in a uniform spiral form from an inside diameter part to an outside diameter part) and the surplus length absorbing performance is increased.

Preferably, the resilient member is formed with a plurality of flat springs having curved shape, and the plurality of flat springs are extended in radial directions from the fixing portion as the center wherein the plurality of flat springs are arranged on a circumference of the fixing portion at equal intervals.

By the above configuration, the flat springs respectively press outward the inside diameter part (an inner peripheral surface) of the winding part of the flat wire harness by a uniform force. The flat springs are respectively arranged at equal intervals and the winding direction of the flat springs (a direction in which a free end of the spring protrudes from the boss part) is preferably the same as the winding direction (a pulling out direction) of the winding part of the flat wire harness to smoothly pull out and wind the flat wire harness.

Preferably, the resilient member is a spiral spring bent in a form of a loop.

By the above configuration, one spiral spring presses outward the inside diameter part (an inner peripheral surface) of the winding part of the flat wire harness by a uniform force. The winding direction of the spiral spring is preferably the same as the winding direction (a pulling out direction) of the winding part of the flat wire harness to smoothly supply and wind the flat wire harness.

Preferably, it is provided that the power feeding device further comprising:
a housing that has an annular wall,
wherein the housing accommodates the fixing portion, the winding part and the resilient member so that the winding part is extended along an inner periphery of the annular wall.

By the above configuration, the winding part of the flat wire harness comes into contact with the inner surface of the annular wall of the housing, so that a dimension of an outermost diameter of the winding part is regulated (prescribed). The winding part or the resilient member is safely protected in the housing from an interference with an external part.

Preferably, the annular wall has an opening part for leading out the flat wire harness, and curved surfaces are formed at both sides of the opening part to guide the flat wire harness.

By the above configuration, when the flat wire harness is pulled out from the housing and when the flat wire harness is drawn in to the housing, the flat wire harness smoothly comes into sliding contact with the curved surfaces respectively so as to smoothly pull out and draw in the flat wire harness with a low friction.

It is provided that a wire harness arranging structure comprising:
the power feeding device,
wherein the housing is arranged near a vehicle room in the vicinity of an intermediate part in a longitudinal direction of a guide rail in a lower side of a step part of a vehicle body; and
wherein the flat wire harness is arranged in a slide door from the housing along a guide arm engaged with the guide rail.

By the above configuration, when the slide door is completely closed, the flat wire harness is pulled out in a door closing direction from the housing against an urging force of the spring. When the slide door is half opened, the flat wire harness is drawn in to the housing to absorb a surplus length. When the slide door is completely opened, the flat wire harness is pulled out in a door opening direction from the housing against the urging force of the spring. The housing or the flat wire harness does not interfere with the guide rail of the vehicle body side or the guide arm in the slide door side and is arranged with a space saved.

### Advantage of the Invention

According to the above-described structure, since the resilient member urges the winding part of the flat wire harness from the inner side, the winding part is maintained in an annular form even by the small number of resilient members and the surplus length absorbing function of the flat wire harness can be assuredly exhibited. Further, since the resilient member expands the diameter of the winding part to the large diameter, the entire length of the winding part can be increased and the surplus length absorbing performance can be improved. Further, a power feeding device which is simple and compact in its structure and low in its cost can be provided by the small number parts such as the fixing portion, the resilient member and the flat wire harness.

Further, the diameter of the winding part of the flat wire harness can be assuredly expanded by the plurality of flat springs to improve the surplus length absorbing function or the surplus length absorbing performance.

Further, the diameter of the winding part of the flat wire harness can be assuredly expanded by the one spiral spring to improve the surplus length absorbing function or the surplus length absorbing performance. Since the resilient member is one, the number of attaching operations of the resilient member to the fixing portion can be reduced.

Further, the outermost diameter of the winding part of the flat wire harness is regulated by the annular wall of the housing, so that a length of pulling out the flat wire harness or a length of absorbing a surplus length can be easily designed. Further, the winding part or the resilient member is safely protected in the housing from an interference with an external part.

Further, the flat wire harness can be allowed to smoothly come into sliding contact with the curved surfaces respectively so as to smoothly pull out and draw in the flat wire harness with a low friction.

Since the housing is arranged inside the guide rail and the flat wire harness is arranged along the guide arm of the slide door, the housing or the flat wire harness can be arranged by saving a space saved without interfering with the guide rail or the guide arm.

### Brief Description of the Drawings

[Fig. 1] Fig. 1 is an exploded perspective view showing one embodiment of a power feeding device according to the present invention.
[Fig. 2] Fig. 2 is a plan view showing an inner structure of the power feeding device according to the present invention.
[Fig. 3] Fig. 3 is a plan view showing an inner structure which does not use a spring member as a reference.
[Fig. 4] Fig. 4 is an exploded perspective view showing a power feeding device according to another embodiment of the present invention.
[Fig. 5] Fig. 5 is a plan view showing an inner structure of the power feeding device.
[Fig. 6] Fig. 6 is a perspective view showing one exemplary embodiment of a wire harness fixing member of a power feeding device side.
[Fig. 7] Fig. 7 is a perspective view showing one exemplary embodiment of a wire harness arranging structure using the power feeding device of the present invention when a slide door is completely closed.
[Fig. 8] Fig. 8 is a perspective view showing one exemplary embodiment of the wire harness arranging structure using the power feeding device of the present invention when the slide door is half opened.
[Fig. 9] Fig. 9 is a perspective view showing one exemplary embodiment of the wire harness arranging structure using the power feeding device of the present invention when the slide door is completely opened.

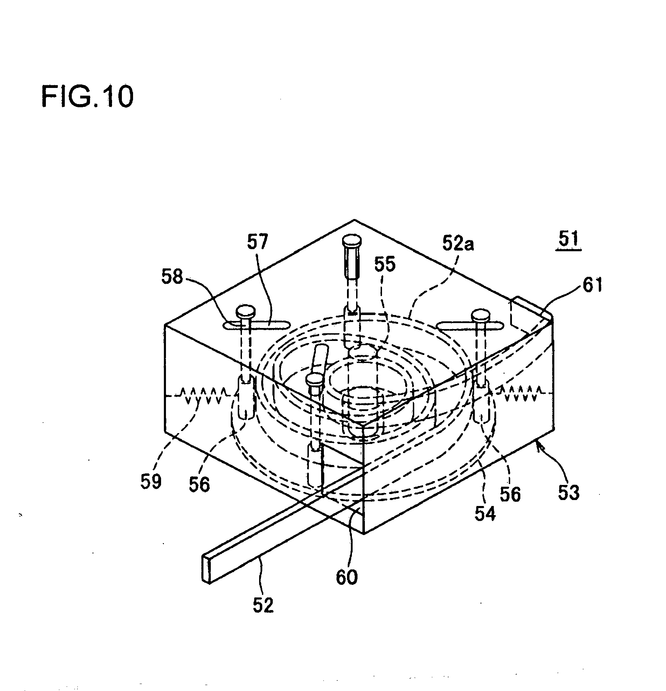

[Fig. 10] Fig. 10 is a perspective view showing the related power feeding device.

### Description of Embodiments

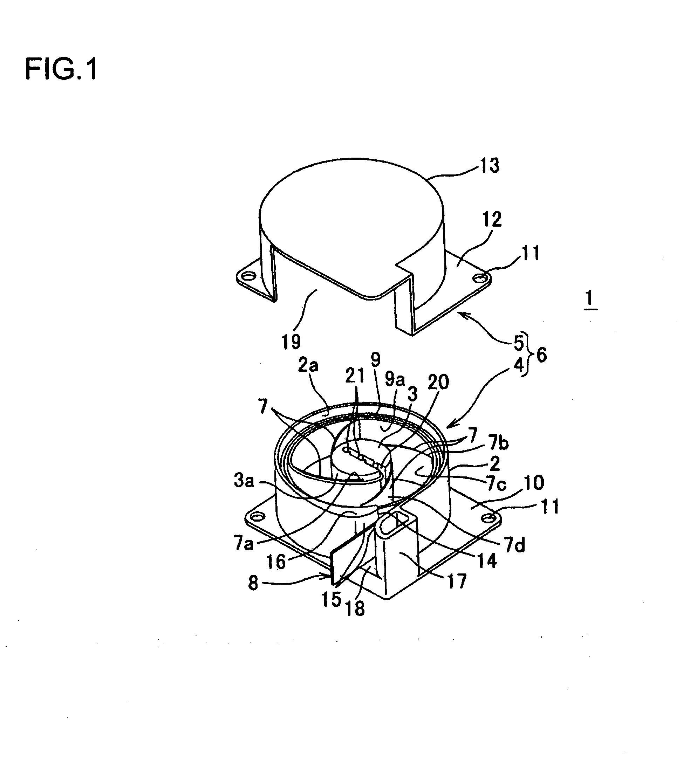

Fig. 1 to Fig. 2 show one exemplary embodiment of a power feeding device according to the present invention.

As shown in Fig. 1, the power feeding device 1 includes a housing 6 made of a synthetic resin and having a circular annular part (an annular wall) 2 and a cylindrical boss part 3 as a center thereof, a plurality of plate shaped spring members 7 arranged in the radial directions in an outer periphery of the boss part 3 and a flexible flat wire harness 8 accommodated under a state that an inside diameter part 9a of a winding part 9 is pressed by the spring members 7 respectively and a diameter of the flat wire harness is enlarged annularly along an inner peripheral surface 2a of the annular part 2.

The housing 6 has a base part 4 and a cover part 5. The base part 4 is preferably formed integrally with the annular part 2 and the boss part 3 provided upright on a base plate part 10. The cover part 5 is formed with a horizontal base plate part 12 overlapped on the base plate part 10 and fixed by fastening screws to hole parts 11 and a lid shaped (semi-annular) cover wall 13 provided upright on the base plate part 12 to cover the annular part 2. When the boss part 3 is formed with a separate member, the boss part 3 is fixed to the base plate part 10 not so as to rotate in the circumferential direction of the boss.

The annular part 2 has an opening part 14 for leading out the wire harness which is formed by longitudinally cutting out a part of a circumference. At both right and left sides of the opening part 14, guide walls 16 and 17 including curved surfaces 15 respectively opened outside and opposed to each other are formed integrally with the annular wall 2. Between both the guide walls 16 and 17, a short wire harness leading out passage 18 is formed to communicate with the opening part 14. In the cover wall 13 of the cover part 5, an opening 19 is formed so as to expose both the guide walls 16 and 17.

The boss part 3 has a slit 20 passing a center from a part of an outer peripheral surface 3a and a plurality of vertical protrusions 21 for holding the wire harness are arranged in a staggered manner inside the slit 20 to form a wire harness fixing portion. The flat wire harness 8 is bent in the direction of, for instance, 90° in the slit 20, passes through the base plate part 10 in a bottom part side and is led out to an external part (for instance, a vehicle body side).

The spring member 7 is a flat spring straight (or a little bent) under a free state. A base end 7a is inserted and fixed into second slits (not shown in the drawing) respectively of the boss part 3 or fixed to the outer peripheral surface 3a of the both part 3 by a screw and extended in the tangential direction of the boss part 3. A head end (a free end)7b is allowed to come into resilient contact with an inner peripheral surface 9a of the winding part 9 of the flat wire harness 8 and bent in a curved form.

A bending direction of each of the spring members 7 is the same as the winding direction of the winding part 9 of the flat wire harness 8. A bent inside surface 7c is directed toward a direction for pulling out the winding part 9 from the housing 6 and a bent outside surface 7d is directed toward a direction for drawing in the flat wire harness 8 to the housing. A material of the spring member 7 is preferably made of a synthetic resin to prevent the flat wire harness 8 from being broken, however, a metal material may be used and an end may be bent to prevent the flat wire harness from being broken.

In this embodiment, four spring members 7 are arranged at equal intervals. The number of the spring members 7 is not limited to four, however, in order to wind the flat wire harness 8 not in an elliptic form, but in an annular form, at least three spring members are preferably arranged. In the flat wire harness 8, the inside diameter part 9a of the winding part 9 is pressed outward by the spring members 7 respectively so that the flat wire harness is spirally arranged (gathered) with a large diameter in the vicinity of the inner surface 2a of the annular part 2 of the housing 6.

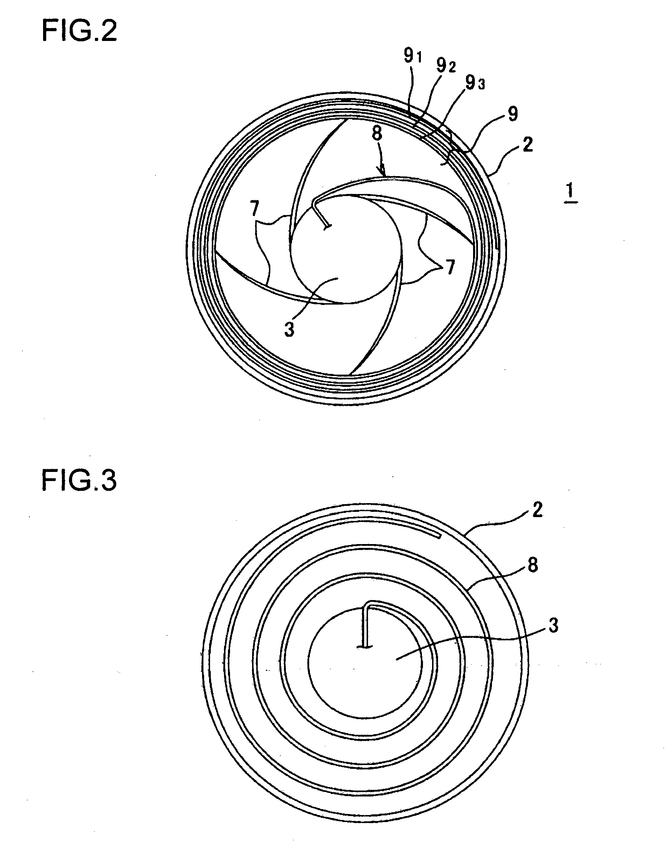

Fig. 3 shows a form of the flat wire harness 8 as a reference when the spring members 7 are not used. The flat wire harness 8 is extended with substantially uniform spaces provided in the diametrical direction from the boss part 3 to the annular part 2. Under this state, the length of a spiral part (substituted by reference numeral 8) of the flat wire harness 8 is shortened. As shown in Fig. 2, the flat wire harness 8 is spirally wound near to an outer periphery by the urging force of the spring members 7, that is, winding wire harness parts 9₁ to 9₃ forming the winding part 9 of the flat wire harness 8 are respectively arranged at narrow pitches in the diametrical direction so as to be mutually come close or come into contact, so that the length of the flat wire harness 8 in the housing can be set to be long. Thus, the length of a wire harness surplus length absorbing performance is increased.

The spring members 7 serve to arrange the flat wire harness 8 annularly near to the outer periphery and a surplus length is absorbed (drawn into the housing) by a force that the flat wire harness 8 itself is resiliently restored from its straight state to a winding state. It is to be understood that the flat wire harness 8 can be positively drawn in to the housing by a force that the spring members 7 are expanded in the diametrical direction from a compressed state.

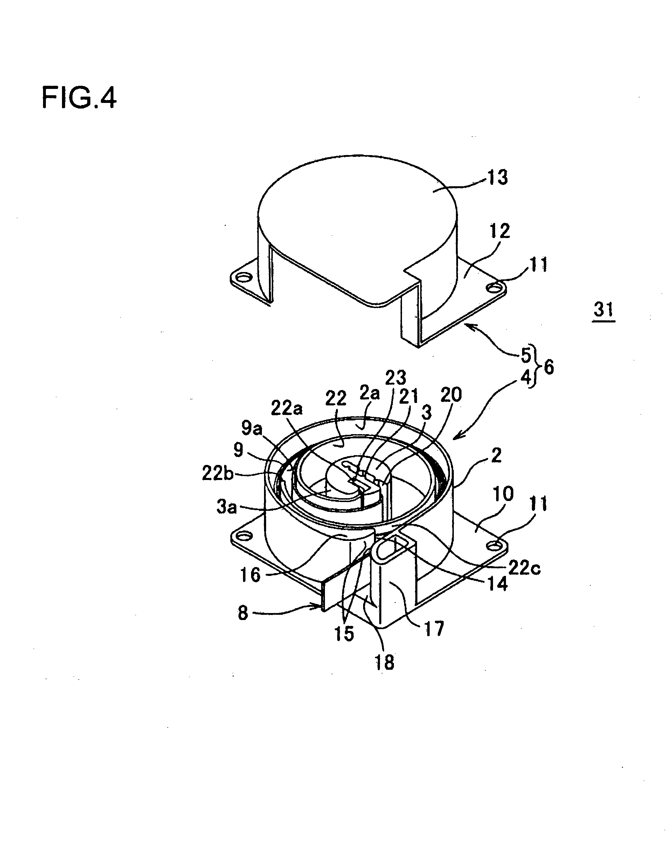

Fig. 4 to Fig.5 show another exemplary embodiment of a power feeding device according to the present invention. The same components as those of Figs. 1 to 2 are designated by the same reference numerals and described.

As shown in Fig. 4, the power feeding device 31 includes a housing 6 made of a synthetic resin and having a circular annular part (an annular wall) 2 and a cylindrical boss part 3 as a center thereof, one loop shaped spring member 22 wound outward from the boss part 3 in the form of a loop and having a diameter enlarged and a flexible flat wire harness 8 accommodated under a state that an inside diameter part 9a of a winding part 9 is pressed by the spring member 22 and a diameter of the flat wire harness is enlarged annularly along an inner peripheral surface 2a of the annular part 2. The structure is the same as that of the exemplary embodiment shown in Figs. 1 to 2 except a structure of the spring member 22.

The housing 6 has a base part 4 and a cover part 5. The base part 4 is preferably formed integrally with the annular part 2 and the boss part 3 provided upright on a base plate part 10. The cover part 5 is formed with a horizontal base plate part 12 overlapped on the base plate part 10 and fixed by fastening screws to hole parts 11 and a lid shaped cover wall 13 provided upright on the base plate part 12 to cover the annular part 2. When the boss part 3 is formed with a separate member, the boss part 3 is fixed to the base plate part 10 not so as to rotate in the circumferential direction of the boss.

The annular part 2 has an opening part 14 for leading out the wire harness which is formed by longitudinally cutting out a part of a circumference. At both right and left sides of the opening part 14, guide walls 16 and 17 including curved surfaces 15 respectively opened outside and opposed to each other are formed integrally with the annular wall 2. Between both the guide walls 16 and 17, a short wire harness leading out passage 18 is formed to communicate with the opening part 14. In the cover wall 13 of the cover part 5, an opening 19 is formed that exposes both the guide walls 16 and 17.

The boss part 3 has two long and short slits 20 and 23 cut out in the diametrical direction from an outer peripheral surface 3a and a plurality of vertical protrusions 21 for holding the wire harness are arranged in a staggered manner inside the long slit 23 to form a wire harness fixing portion. The flat wire harness 8 is bent in the direction of, for instance, 90° in the slit 20, passes through the base plate part 10 in a bottom part side and is led out to an external part (for instance, a vehicle body side). Further, inside the short slit 23, a base end part 22a of the spring member 22 is bent, inserted and fixed.

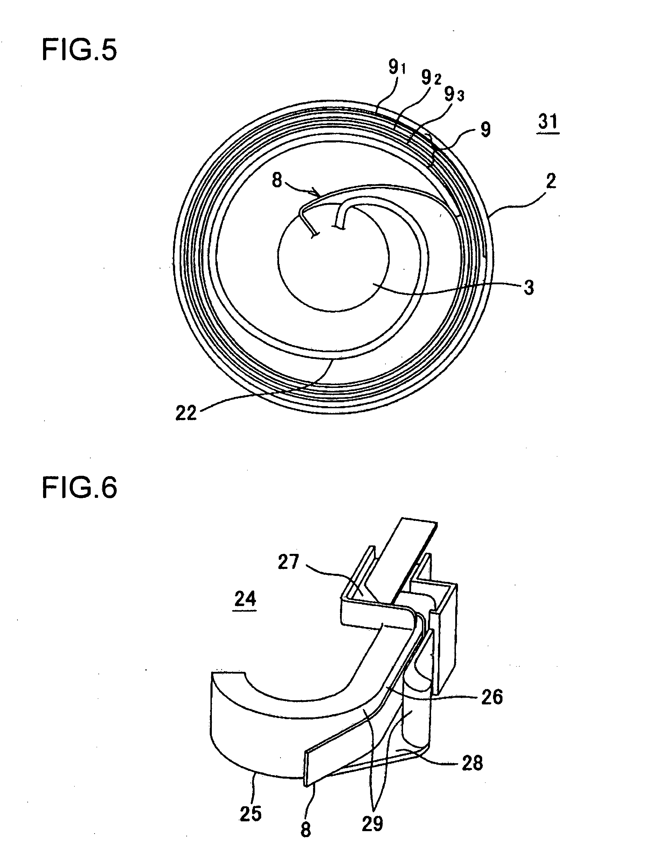

The spring member 22 is a flat spring straight under a free state or a spiral spring bent in the form of a large loop. Under an attached state shown in Figs. 4 and 5, an end (a free end) 22b of the spring member 22 is located in the form of a loop with the small number of windings such as about one turn + 1/4 times as long as one turn relative to the base end (a fixed end) 22a. When the spring member 22 is long (the number of winding is large), a problems arises that the spring member 22 is pulled out from the housing 6 together with the flat wire harness 8. When the number of windings of the spring member 22 is one turn or more, the flat wire harness 8 is sufficiently arranged near to an outermost diameter part.

The base end 22a of the spring member 22 is inserted and fixed to the slit of the boss part 3 and the spring member is bent in the tangential direction of the boss part 3. An outer side surface 22c is allowed to come into resilient contact with an inner peripheral surface 9a of the winding part 9 of the flat wire harness 8 and the spring member is bent in the form of a loop. A winding direction of the spring member 22 is the same as a winding direction of the flat wire harness 8 which is a direction for pulling out the flat wire harness 8 from the housing 6.

A material of the spring member 22 7 is preferably made of a synthetic resin to prevent the abrasion of the flat wire harness 8, however, when the end 22b is rounded, a metal material may be used. In the flat wire harness 8, the inside diameter part 9a of the winding part 9 is pressed outward by the spring member 22 so that the flat wire harness is spirally arranged with a large diameter in the vicinity of the inner surface 2a of the annular part 2 of the housing 6.

As described above in Fig. 3, when the spring member 22 is not used, the flat wire harness 8 is uniformly extended in the diametrical direction from the boss part 3 to the annular part 2. Under this state, the length of a spiral part of the flat wire harness 8 is shortened, however, as shown in Fig. 5, the flat wire harness 8 is spirally wound near to an outer periphery by the urging force of the spring member 22, that is, winding wire harness parts 9₁ to 9₃ forming the winding part 9 of the flat wire harness 8 are respectively arranged at narrow pitches in the diametrical direction so as to mutually come close or come into contact, so that the length of the flat wire harness 8 in the housing can be set to be long. Thus, the length of a wire harness surplus length absorbing performance is increased.

The spring member 22 serves to arrange the flat wire harness 8 annularly near to the outer periphery and a surplus length is absorbed (drawn in to the housing) by a force that the flat wire harness 8 itself is resiliently restored from its straight state to a winding state. It is to be understood that the flat wire harness 8 can be positively drawn in to the housing by a force that the spring member 22 is expanded in the diametrical direction from a compressed (a reduced diameter) state.

Fig. 6 shows one form of a wire harness fixing member 24 for fixing the end part of the flat wire harness 8 pulled out from the housing 6 in the exemplary embodiments respectively shown in Figs. 1 and 4 to a feeding side (an attaching side).

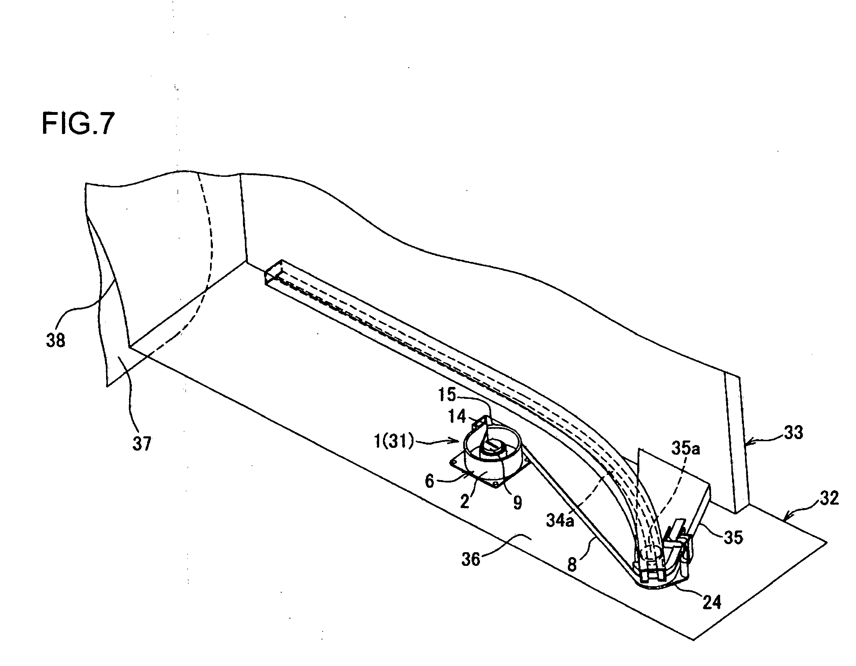

The wire harness fixing member 24 is attached to a horizontal guide arm 35 of a slide door 33 (Fig. 7) when the above-described housing 6 is horizontally arranged in a vehicle body 32 (Fig. 7)side, and includes a substantially J shaped bent wall part 25 extending along an end part of the guide arm 35, a groove shaped guide passage 28 that bends and arranges the flat wire harness 8 in the directions of 90° at two positions along an upper surface 27 from an outer side surface 26 and curved surfaces 29 for guiding the wire harness which are formed at both right and left sides of an entrance of the guide passage 28.

Fig. 7 to Fig. 9 show one exemplary embodiment of a wire harness arranging structure using the power feeding device according to the present invention. As the power feeding device 1 and 31, either the exemplary embodiment shown in Fig. 1 or the exemplary embodiment shown in Fig. 4 may be used (an operation is the same).

Fig. 7 shows a completely closed state of the slide door (a movable structure) 33 of a motor vehicle. A housing 6 (an illustration of a cover part 5 is omitted) is horizontally arranged on a panel 36 under a step part of an entrance of the vehicle body (a fixed structure) 32. A guide rail 34 that guides a roller 35a of the guide arm 35 in a front end side of the slide door 33 to a groove 34a so as to freely slide is suspended and arranged in an upper side of the panel 36. The housing 6 is arranged inside the vehicle in the vicinity of an intermediate part in the longitudinal direction of the guide rail 34.

The wire harness fixing member 24 shown in Fig. 6 is fixed to an end of the guide arm 35. One of a flat wire harness 8 is pulled out forward from the housing 6, fixed to the wire harness fixing member 24, arranged toward the slide door side and connected to an auxiliary machine (not shown in the drawing). The other (not shown in the drawing) of the flat wire harness 8 is arranged in the vehicle body side from, for instance, a bottom part side of the housing 6.

Under the completely closed state of the slide door 33 in Fig. 7, the flat wire harness 8 is greatly (long) pulled out obliquely forward from the housing 6 against the urging force of a spring member 7 (22), and a diameter of a winding part 9 of the flat wire harness 8 is reduced in the housing (the number of windings of the winding part 9 is preferably the same as that when the diameter is enlarged). The spring member 7 (22) is pressed inward in an innermost diameter part of the winding part 9 so that a diameter is reduced. The flat wire harness 8 is smoothly led out in a bent form along curved surfaces 15 in a front side of an opening part 14 of the housing 6. The guide arm 35 is located in a front end side of the guide rail 34. In Fig. 7, reference numeral 37 designates a rear wheel and 38 designates a rear wheel arch.

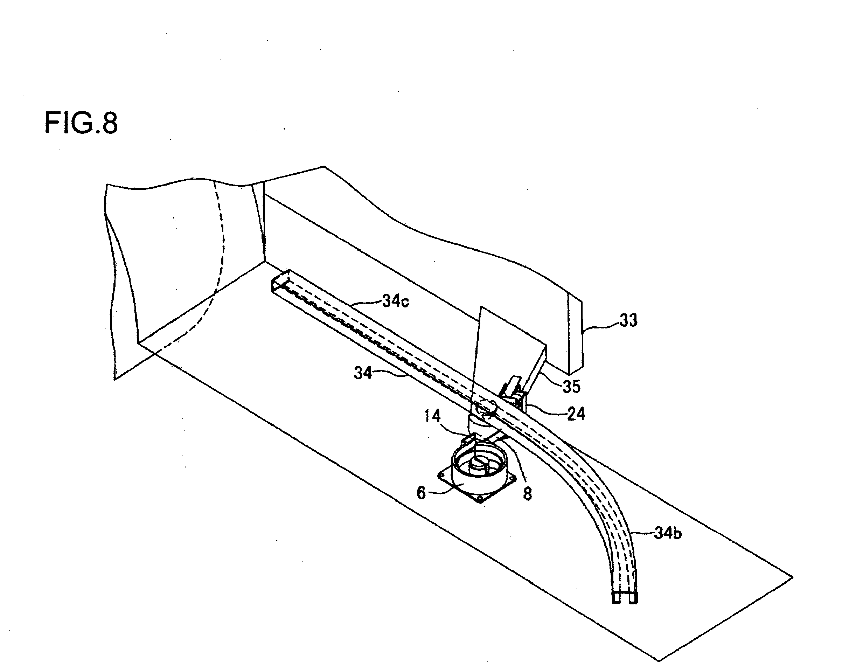

Under a half opened state of the slide door 33 shown in Fig. 8, the guide arm 35 moves from a bent part 34b of the first half of the guide rail 34 to a straight part 34c of the latter half. Under a state that the guide arm 35 comes close to the housing 6, the flat wire harness 8 is positively drawn in to the housing by a restoring force of itself and a resilient force of the spring member 7 (22) in a direction of enlarging a diameter to absorb a surplus length. The flat wire harness 8 is shortly led out straight toward the guide arm 35 from the opening part 14 from the housing 6.

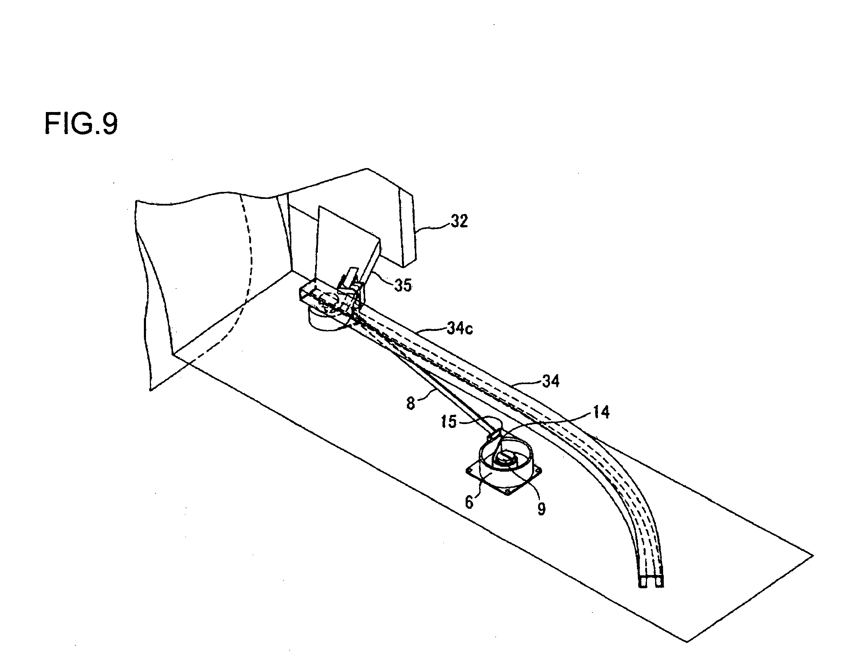

Under a completely opened state of the slide door 32 shown in Fig. 9, the flat wire harness 8 is greatly (long) pulled out rearward from the housing 6 against the urging force of the spring member 7 (22), and the diameter of the winding part 9 of the flat wire harness 8 is reduced in the housing (the number of windings is preferably the same as that when the diameter is enlarged). The spring member 7 (22) is pressed inward in the innermost diameter part of the winding part 9 so that the diameter is reduced. The flat wire harness 8 is smoothly led out in a bent form along the curved surfaces 15 in a rear side of the opening part 14 of the housing 6 and passes a lower side of the latter half part 34c of the guide rail 34 to reach the end of the guide arm 35. The guide rail 35 is located at a rear end side of the guide rail 34.

In Fig. 7 to Fig. 9, an example is shown in which the power feeding devices 1 and 31 are applied to feed electric current to the slide door 32 of the motor vehicle. However, the power feeding devices 1 and 31 may be applied to feed the electric current to a hinge opening and closing type door or a slide seat (not shown in the drawing) as other movable members than the slide door.

For instance, when the housing 6 is vertically arranged in the hinge opening and closing type door or a vehicle body (a fixed structure), the flat wire harness 8 is pulled out from the housing 6 when the door is opened and wound back to the housing when the door is closed. Further, when the housing 6 is horizontally or vertically arranged on a vehicle body floor (a fixed structure) and an end of the flat wire harness 8 is arranged on the slide seat, the flat wire harness 8 is expanded and contracted relative to the housing 6 in accordance with a forward and backward sliding movement of the slide seat.

Further, in the above-described exemplary embodiments, the housing 6 is used to regulate a dimension of the flat wire harness 8 when the diameter is enlarged to a maximum size. For instance, in Fig. 7 to Fig. 9, when the annular part 2 or the cover part 5 of the housing 6 is omitted (eliminated), there is a fear of an entry of water or dust. However, in the half opened state shown in Fig. 8, the flat wire harness 8 is expanded to a maximum diameter by the restoring force, since the restoring force of the flat wire harness itself is limited, even when the housing 6 is not provided, the maximum diameter of the flat wire harness 8 is regulated. Accordingly, the housing 6 can be omitted in a part where there is no fear of the entry of water or dust (the boss part 3 and the part 10 for fixing the boss part to an attaching side are necessary).

### Industrial Applicability

In a device that a diameter of a flat wire harness is spirally enlarged or reduced to absorb a surplus length, can be provided a power feeding device in which a surplus length absorbing performance of a wire harness can be improved, a structure can be simplified and a cost can be lowered and a wire harness arranging structure using the power feeding device.

### Description of Reference Numerals and Signs

1, 31...power feeding device 2...annular wall 3...boss part 6..housing 7, 22.. spring member 8...flat wire harness 9...winding part 9a...inside diameter part 14..opening part 15... curved surface 32.. vehicle body 33... slide door 34... guide rail 35... guide arm

## Claims

1. A power feeding device (1; 31) comprising:
a fixing portion (3);
a flat wire harness (8) that is arranged so as to wind a plurality of times on a periphery of the fixing portion (3) as a center; and
a resilient member (7; 22) that is provided between the fixing portion (3) and a winding part (9) of the flat wire harness (8), **characterised in that**
the resilient member (7; 22) urges the winding part (9) of the flat wire harness (8) in a direction in which the flat wire harness (8) separates from the fixing portion (3), and the flat wire harness (8) is arranged so as to be overlapped in a diametrical direction in the winding part (9) by an urging operation of the resilient member (7; 22).

2. The power feeding device (1) according to claim 1, wherein the resilient member (7) is formed with a plurality of flat springs having curved shape; and
wherein the plurality of flat springs are extended in radial directions from the fixing portion (3) as the center,
wherein the plurality of flat springs (7) are arranged on a circumference of the fixing portion (3) at equal intervals.

3. The power feeding device (31) according to claim 1, wherein the resilient member (22) is a spiral spring bent in a form of a loop.

4. The power feeding device (1; 31) according to any one of claims 1 to 3, further comprising:
a housing (6) that has an annular wall (2),
wherein the housing (6) accommodates the fixing portion (3), the winding part (9) and the resilient member (7; 22) so that the winding part (9) is extended along an inner periphery (2a) of the annular wall (2).

5. The power feeding device (1; 31) according to claim 4, wherein the annular wall (2) has an opening part (14) for leading out the flat wire harness (8); and
wherein curved surfaces (16, 17) are formed at both sides of the opening part (14) to guide the flat wire harness (8).

6. A wire harness arranging structure comprising:
a power feeding device (1; 31) according to claim 4 or 5,
wherein the housing (6) is arranged near a vehicle room in the vicinity of an intermediate part in a longitudinal direction of a guide rail (34) in a lower side of a step part of a vehicle body; and
wherein the flat wire harness (8) is arranged in a slide door (33) from the housing (6) along a guide arm (35) engaged with the guide rail (34).

## Patentansprüche

1. Stromversorgungsvorrichtung (1; 31), umfassend:
einen Befestigungsabschnitt (3);
einen flachen Kabelbaum (8), der derart angeordnet ist, dass er sich mehrmals auf einem Umfang des Befestigungsabschnittes (3) als Zentrum windet; und
ein federndes Element (7; 22), das zwischen dem Befestigungsabschnitt (3) und einem Windungsteil (9) des Flachen Kabelbaums (8) vorgesehen ist,
**dadurch gekennzeichnet, dass**
das federnde Element (7; 22) den Windungsteil (9) des flachen Kabelbaums (8) in eine Richtung drückt, in der sich der flache Kabelbaum (8) von dem Befestigungsabschnitt (3) trennt, und
der flache Kabelbaum (8) derart eingerichtet ist, dass er in einer diametralen Richtung in dem Windungsteil (9) durch eine Drucktätigkeit des federnden Elementes (7; 22) überlappt.

2. Stromversorgungsvorrichtung (1) nach Anspruch 1, bei der das federnde Element (7) mit einer Vielzahl flacher Federn ausgebildet ist, die eine gekrümmte Form haben; und
sich die Vielzahl der flachen Federn in radialen Richtungen von dem Befestigungsabschnitt (3) als Zentrum erstrecken,
wobei die Vielzahl der flachen Federn (7) auf einem Umfang des Befestigungsabschnittes (3) in gleichen Intervallen angeordnet sind.

3. Stromversorgungsvorrichtung (31) nach Anspruch 1, bei der das federnde Element (22) eine Spiralfeder ist, die ringförmig gebogen ist.

4. Stromversorgungsvorrichtung (1; 31) nach einem der Ansprüche 1 bis 3, weiterhin umfassend:
ein Gehäuse (6), das eine ringförmige Wand (2) hat,
wobei das Gehäuse (6) den Befestigungsabschnitt (3), den Windungsteil (9) und das federnde Element (7; 22) aufnimmt, so dass sich der Windungsteil (9) entlang eines Innenumfangs (2a) der ringförmigen Wand (2) erstreckt.

5. Stromversorgungsvorrichtung (1; 31) nach Anspruch 4, bei der die ringförmige Wand (2) einen Öffnungsteil (14) hat, um den flachen Kabelbaum (8) auszuleiten; und
die gekrümmten Oberflächen (16, 17) auf beiden Seiten des Öffnungsteils (14) ausgebildet sind, um den flachen Kabelbaum (8) zu leiten.

6. Kabelbaumanordnungsstruktur, umfassend:
eine Stromversorgungsvorrichtung (1; 31) nach Anspruch 4 oder 5,
wobei das Gehäuse (6) nahe eines Fahrzeugraumes in der Nähe eines Zwischenteils in einer Längsrichtung einer Führungsschiene (34) auf einer Unterseite eines Stufenteils eines Fahrzeugkörpers angeordnet ist; und
der flache Kabelbaum (8) in einer Schiebetür (33) von dem Gehäuse (6) entlang eines Führungsarmes (35) angeordnet ist, der mit der Führungsschiene (34) in Eingriff ist.

## Revendications

1. Dispositif d'alimentation en énergie (1 ; 31) comprenant :
une partie de fixation (3) ;
un faisceau électrique plat (8) qui est agencé afin de s'enrouler plusieurs fois sur une périphérie de la partie de fixation (3) en tant que centre ; et
un élément élastique (7 ; 22) qui est prévu entre la partie de fixation (3) et une partie d'enroulement (9) du faisceau électrique plat (8), **caractérisé en ce que** :
l'élément élastique (7 ; 22) pousse la partie d'enroulement (9) du faisceau électrique plat (8) dans une direction dans laquelle le faisceau électrique plat (8) se sépare de la partie de fixation (3), et
le faisceau électrique plat (8) est agencé afin d'être chevauché dans une direction diamétrale dans la partie d'enroulement (9) par une opération de poussée de l'élément élastique (7 ; 22).

2. Dispositif d'alimentation en énergie (1) selon la revendication 1, dans lequel l'élément élastique (7) est formé avec une pluralité de ressorts plats ayant une forme incurvée ; et
dans lequel la pluralité de ressorts plats sont étendus dans des directions radiales à partir de la partie de fixation (3) en tant que centre,
dans lequel la pluralité de ressorts plats (7) sont agencés sur une circonférence de la partie de fixation (3) à intervalles égaux.

3. Dispositif d'alimentation en énergie (31) selon la revendication 1, dans lequel l'élément élastique (22) est un ressort en spirale plié sous une forme de boucle.

4. Dispositif d'alimentation en énergie (1 ; 31) selon l'une quelconque des revendications 1 à 3, comprenant en outré :
un boîtier (6) qui a une paroi annulaire (2),
dans lequel le boîtier (6) loge la partie de fixation (3), la partie d'enroulement (9) et l'élément élastique (7 ; 22) de sorte que la partie d'enroulement (9) est étendue le long d'une périphérie interne (2a) de la paroi annulaire (2).

5. Dispositif d'alimentation en énergie (1 ; 31) selon la revendication 4, dans lequel la paroi annulaire (2) a une partie d'ouverture (14) pour la sortie du faisceau électrique plat (8) ; et
dans lequel les surfaces incurvées (16, 17) sont formées des deux côtés de la partie d'ouverture (14) pour guider le faisceau électrique plat (8).

6. Structure d'agencement de faisceau électrique comprenant :
un dispositif d'alimentation en énergie (1 ; i 31) selon la revendication 4 ou 5,
dans laquelle le boîtier (6) est agencé à côté d'un intérieur de véhicule à proximité d'une partie intermédiaire dans une direction longitudinale d'un rail de guidage (34) dans un côté inférieur d'une partie d'échelon d'une carrosserie de véhicule ; et
dans laquelle le faisceau électrique plat (8) est agencé dans une porte coulissante (33) à partir du boîtier (6) le long d'un bras de guidage (35) mis en prise avec le rail de guidage (34).
